# EUROPEAN PATENT APPLICATION

(11) **EP 1 626 200 A1**
(43) Date of publication of application: **15.02.2006**
(21) Application number: 05013949.2
(22) Date of filing: 28.06.2005
(51) Int. Cl.: F16F 15/26, F02M 63/02, F02B 67/04, F02B 63/06

(54) **Engine vibration reduction system**

(30) Priority: 09.08.2004 JP 2004232312
(71) Applicant: Mazda Motor Corporation, Aki-gun Hiroshima 735-8670 (JP)
(72) Inventor: Hayashi, Yukiteru, Aki-gun Hiroshima 735-8670 (JP); Kumano, Shohei, Aki-gun Hiroshima 735-8670 (JP)
(74) Representative: Laufhütte, Dieter

(57) **Abstract**

A transmission (**2**) connected to the rear end of a transversely-mounted, four-cylinder diesel engine (**1**) includes a front-wheel differential gear box (**12**) extending toward the rear of the vehicle. A supply pump (**14**) is mounted on the vehicle front side of the front end part of the engine (**1**). High-pressure fuel from the supply pump (**14**) is fed to fuel injection valves (**13**) via a common rail. The supply pump (**14**) includes a single plunger (**30**) that is reciprocally moved by a cam (**32**) driven by a crankshaft of the engine. The plunger (**30**) is reciprocally moved to produce inertial forces opposite in phase to second-order inertial forces of the pistons and associated parts of the engine (**1**), which effectively reduces pitching vibrations due to reciprocal second-order inertial forces of the pistons and associated parts of the engine and in turn reduces booming noise.

## Description

### Technical Field

This invention relates to vibration reduction systems for engines.

### Background Art

In order to reduce vertical vibrations of reciprocating engines due to pistons and associated parts such as connecting rods in the engines, for multi-cylinder engines, their crankshafts are provided with counter weights to balance the first-order inertial forces. Further, for four-cylinder reciprocating engines whose second-order inertial forces providing vibromotive forces are large, integrating a secondary balancer therein as necessary is known to be effective.

Currently widely adopted balancers have a pair of balance shafts arranged in parallel to each other to both sides of a crankshaft. The pair of balance shafts have eccentric unbalanced masses, respectively. Both the balance shafts are rotated twice as fast as the crankshaft. At this time, one of the balance shafts is rotated in the same direction as the crankshaft, while the other is rotated in the opposite direction. Thus, inertial forces opposite to the second-order inertial forces of the engine are generated to cancel them out, which reduces engine vibrations.

Japanese Unexamined Patent Publication No. 2003-83396 proposes a reciprocating balancer substitutable for the above, well-known type balancers. The reciprocating balancer has a cam-driven balance mass disposed in the vicinity of a crankshaft in an engine, and is configured to reciprocally move the balance mass, thereby generating inertial forces cancelling out the second-order inertial forces. This published document also proposes to use the reciprocal movement of the balance mass to provide a compressor for an air conditioner.

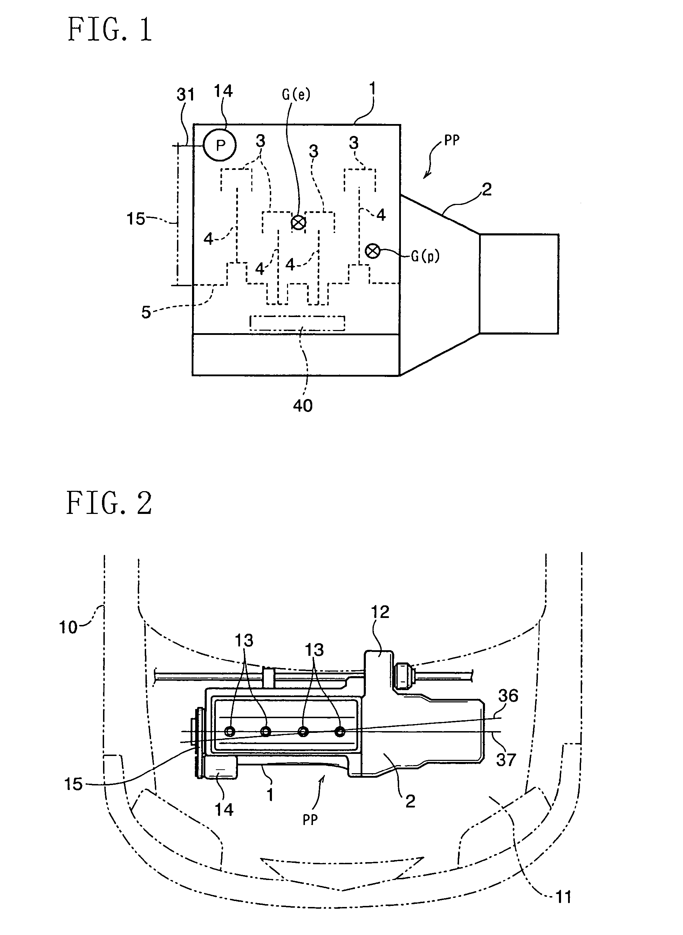

Figure **1** shows an engine **1** mounted on a vehicle. The engine **1** is mounted on a vehicle body via a mounting member such as a rubber mount and constitutes part of a power plant **PP** in which a transmission **2** and other power train components are connected to the rear end of the engine **1**. In the figure, the reference numeral **3** indicates a piston, the reference numeral **4** indicates a connecting rod, and the reference numeral 5 indicates a crankshaft. The centre of gravity G(p) of the power plant **PP** including the engine **1** is located closer to the engine rear end than the centre of gravity G(e) of the engine 1 alone. Therefore, when the pistons and their associated parts in the engine **1** vibrate the engine body up and down, pitching vibrations generate about the centre of gravity G(p) of the power plant **PP.** This pitching vibrations are known to be a cause of "booming noise".

With the increasing concern in recent years about the natural environment, attention is being given to direct-injection diesel engines which are superior in theoretical thermal efficiency to gasoline engines. As is well known, a major feature of direct-injection diesel engines is to ignite fuel by supplying the fuel, for each cylinder, directly into a high-temperature, high-pressure combustion chamber in the cylinder. Up until recently, the most used fuel injection systems were those in which a so-called in-line type fuel injection pump was built. For the fuel injection systems with a built-in pump, however, there are limits to the controllability over various fuel injection manners, such as multi-stage fuel injection, and to the adaptability to super-high pressure fuel injection. Therefore, many recent diesel engines have employed common rail type fuel injection systems.

Japanese Unexamined Patent Publication No. 2002-371941 discloses a typical common rail type fuel injection system. The common rail type fuel injection system has a supply pump for generating high fuel pressure. The high-pressure fuel produced by the supply pump is fed to the common rail, held at a constant pressure therein and then injected into each of cylinders through respective fuel injection valves for the cylinders. The supply pump in this published document has a pair of plungers opposed to each other in a line, and a cam for driving the plungers. The cam causes the plungers to reciprocally move to produce high-pressure fuel. The produced high-pressure fuel is fed to the common rail through two discharge ports.

### -Problem that the Invention is to Solve-

The removal of second-order inertial forces of engines using the above balancers is effective to reduce the above-mentioned pitching vibrations. Since, however, the balance shafts forming the masses are heavy and the balancers themselves are expensive, there is a practical limit to complete removal of second-order inertial forces.

### Disclosure of the Invention

With the foregoing in mind, an object of the present invention it to provide an engine vibration reduction system which can effectively reduce pitching vibrations due to second-order inertial forces resulting from reciprocal movement of the pistons and associated parts in the engine to reduce "booming noise" associated with the pitching vibrations, without the dependency on a balancer as a means for suppressing "booming noise", or while reducing the weight of the balancer even with its use.

To attain the above object, the present invention is directed to engines with a fuel injection system for increasing the fuel pressure using a plunger and aims to use reciprocal movement of the plunger to reduce the pitching vibrations.

With conventional in-line type fuel injection pumps for direct-injection diesel engines, the phase relation between their crankshaft and pump plungers needs to be changed in order to control the fuel injection timing according to the engine operating conditions. In contrast, with common rail type supply pumps, since their operation is not involved in the control over the fuel injection timing, the phase relation between their crankshaft and plungers can be held constant.

The present invention focuses on this point to solve the above technical problem. More specifically, the present invention relates to an engine vibration reduction system for a reciprocating engine that is mounted on a vehicle through an elastic mount and equipped with a high-pressure fuel supply pump driven by a crankshaft and a common rail for distributing high-pressure fuel fed from the pump into a plurality of cylinders while accumulating the fed high-pressure fuel. The engine vibration reduction system is characterised in that the pump includes a single plunger and a cam for reciprocally moving the plunger to generate inertial forces opposite in phase to second-order inertial forces of pistons and associated parts in the engine and is placed at the front part of the engine.

When an engine constitutes a power plant together with a transmission connected to the rear end of the engine and the centre of gravity G(p) of the power plant is located closer to the engine rear end than the centre of gravity G(e) of the engine, second-order inertial forces of pistons and associated parts in the engine may cause pitching vibrations about the centre of gravity G(p) of the power plant, which in turn may be a cause of booming noise.

In this aspect of the present invention, the high-pressure fuel supply pump includes a single plunger and the reciprocal movement of the plunger produces vibromotive forces. Therefore, if the plunger is driven to generate inertial forces opposite in phase to second-order inertial forces of pistons and associated parts in the engine, this can reduce the second-order inertial forces of the engine.

Further, in this aspect of the present invention, the high-pressure fuel supply pump is placed at the front part of the engine. When the pump is placed at this position, it can be kept far from the centre of gravity G(p) of the power plant. A large distance is thus created between the centre of gravity G(p) of the power plant and the pump, which gives the pump a large moment of inertia. Therefore, even if the inertial force of the pump is relatively small, the pitching vibrations can be effectively reduced and in turn the effect of suppressing booming noise can be enhanced.

The ideal position of the pump for suppressing the pitching vibrations is in the vertical plane including the straight line connecting the centre of gravity G(p) of the power plant and the centre of gravity G(e) of the engine. The present invention is typically applied to direct-injection diesel engines but is applicable likewise to direct-injection type gasoline engines.

To solve the problem of second-order inertial forces of engines, it is effective, as described above, to integrate a balancer into the engine. Balancers are generally applied to large-displacement four-cylinder engines. The present invention may be applied to balancer-integrated engines or may be applied to engines with no balancer regardless of the engine displacement.

Preferably, the engine vibration reduction system of the present invention is applied to an in-line four-cylinder engine. The cam for driving the plunger of the high-pressure fuel supply pump is operatively connected to the crankshaft of the engine so that the pump is driven in synchronisation with the rotation of the engine. In order to synchronise the cycle of inertial forces produced by reciprocal movement of the single plunger with the cycle of second-order inertial forces of the engine, the plunger needs to be reciprocally moved twice during each rotation of the crankshaft.

This synchronisation can be implemented by employing, as a cam for driving the plunger, a two-lobe cam with two lobes phase-shifted by 180 degrees relative to each other or a single-lobe cam with a single lobe. In order to rotate the plunger twice during a single rotation of the crankshaft, the two-lobe cam needs to be rotated as fast as the crankshaft while the single-lobe cam needs to be rotated twice as fast as the crankshaft.

Preferably, the engine vibration reduction system of the present invention is applied to a transversely-mounted engine. In explaining engines, generally, the side of the engine from which power is output is referred to as the "rear" and the other side on which engine accessories are mounted is referred to as the "front". This definition is also followed herein. Therefore, also in explaining the transversely-mounted engine with the crankshaft oriented along the width of the vehicle, the terms "front end", "front part" and "rear end" are used from the viewpoint of the engine alone.

The power plant including the engine further includes a transmission connected to the rear end of the engine. In a front-wheel-drive vehicle in which the engine is transversely mounted, a differential gear box for front wheels which is integral with the transmission is placed on the side of the transmission toward the rear of the vehicle. With this power plant layout, the centre of gravity G(p) of the power plant is located toward the rear of the vehicle. Therefore, the straight line connecting the centre of gravity G(e) of the engine and the centre of gravity G(p) of the power plant is inclined at a certain angle to the axis of the crankshaft of the engine, so that the engine rear side and engine front side of the line are located toward the rear and front, respectively, of the vehicle. Ideally, the supply pump is placed in the vertical plane including the straight line connecting the centre of gravity G(e) of the engine and the centre of gravity G(p) of the power plant.

Preferably, the supply pump is mounted on the side surface of the front part of the transversely-mounted engine toward the front of the vehicle. In this case, the supply pump can be placed close to the inclined straight line connecting the centre of gravity G(e) of the engine and the centre of gravity G(p) of the power plant, which is a close-to-ideal placement of the supply pump in order to reduce the pitching vibrations. Further preferably, the transversely-mounted engine is of the front-intake/rear-exhaust layout. When the present invention is applied to front-intake/rear-exhaust engines, the supply pump can be prevented from being exposed to exhaust heat.

### Brief Description of the Drawings

Figure **1** is a diagram for illustrating the point of the centre of gravity of an engine and the point of the centre of gravity of a power plant.
Figure **2** is a diagram for illustrating the layout of an engine according to an embodiment of the present invention which is mounted in an engine room provided in the front of an motorcar.
Figure **3** is a schematic diagram of a common rail type fuel injection system.
Figure 4 is an example of a cam for driving a single plunger of a supply pump.
Figure **5** is another example of the cam for driving a single plunger of a supply pump.
Figure **6** is a graph showing the plunger displacement, velocity and acceleration associated with vibromotive forces due to vertically reciprocal movement of the plunger when the plunger is reciprocally moved twice during each rotation of the crankshaft.
Figures **7A** and **7B** are related to Figure **6** and show the relationship between the inertial force due to reciprocal movement of the plunger and the second-order inertial force of the engine.
Figure **8** is a diagram for illustrating the pitching vibration reducing effect of the supply pump placed at the front end of the engine.

### Description of Special Embodiment

Hereinafter, a preferred embodiment of the present invention will be described in detail with reference to the accompanying drawings. The following description of the preferred embodiment is merely illustrative in nature and is not intended to limit the scope, applications and use of the invention.

Figure **2** is a schematic top view of an engine room **11** in the front of an motorcar **10.** As seen from the figure, the motorcar **10** employs the transverse-engine front-wheel-drive design in which an engine **1** is mounted with a crankshaft **5** (see Figure **1)** oriented along the width of the motorcar. The power plant **PP** including the transversely mounted engine **1** further includes a transmission **2,** and a differential gear box **12** for front wheels which adjoins the car rear side of the transmission **2** and is integral with the transmission **2.** The power plant **PP** is mounted on the car body through a mounting member such as a rubber mount, as conventionally done.

The engine **1** is an in-line four-cylinder engine equipped with respective fuel injection valves **13** for cylinders. The engine used in the present invention may be a diesel engine **1** as in this embodiment or may be a direct-injection type gasoline engine. Though not shown, an air intake system and an exhaust system are attached to the car front side and car rear side of the transverse engine **1,** respectively. That is, the transverse engine **1** in this embodiment employs the front-intake/rear-exhaust layout.

On the front part of the engine **1** to which engine accessories are mounted, a supply pump (high-pressure fuel supply pump) **14** is mounted on the upper part of the car front side surface. The supply pump **14** is driven by the crankshaft 5 (see Figure **1)** through a belt **15.**

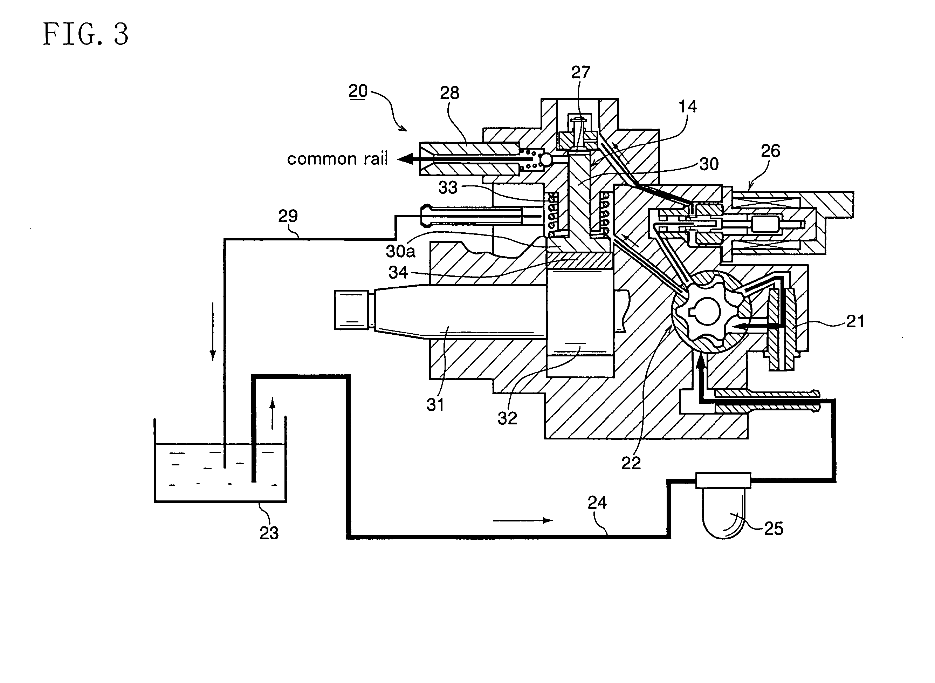

High-pressure fuel is fed to the fuel injection valves **13** through a common rail (not shown). Now, the summary of the common rail type fuel injection system will be described with reference to Figure **3.** The shown fuel injection system **20** includes a feed pump **22** that is equipped with a regulating valve **21** having a well-known piston valve and a spring for biasing the piston valve (though the valve and spring are not shown in Figure **3).** Fuel is fed from a fuel tank **23** via a fuel supply pipe **24** to the feed pump **22.** A filter 25 for filtering the fuel is disposed partway along the fuel supply pipe **24.**

Relatively low-pressure fuel discharged from the feed pump **22** is fed to a working chamber **27** of the supply pump **14** through a fuel-pressure control valve **26,** and compressed in the working chamber **27** to reach a super-high pressure. The super-high pressure fuel produced in the supply pump **14** is fed to the common rail through a discharge port **28** including a discharge valve. Excessive fuel in the feed pump **22** is returned through the inside of the supply pump **14** and an overflow pipe **29** to the fuel tank 23.

The supply pump **14** for compressing the fuel up to a super-high pressure includes a single plunger **30.** The plunger **30** is movable in the vertical direction which is the same direction as the moving direction of the engine pistons **3.** In the shown example, the supply pump **14** is placed so that the plunger **30** compresses the fuel by its upward movement. The single plunger **30** is reciprocally moved by a cam **32** of a rotary shaft **31,** so that the volume of the working chamber **27** is increased or decreased. The plunger **30** is always biased toward being pressed against the cam **32** by a return spring **33.** The rotary shaft **31** is driven by the crankshaft **5,** as described above, to rotate in synchronisation with the rotation of the crankshaft **5.** In Figure 3, the reference numeral **34** indicates a shoe and bush interposed between the cam **32** and a plunger head 30a.

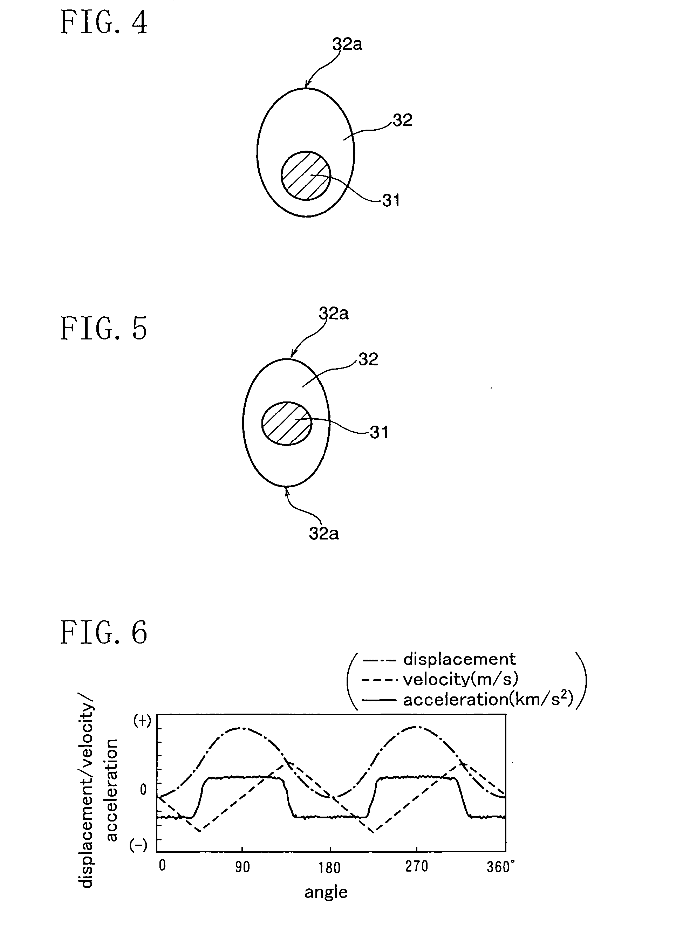

Figures **4** and **5** show respective examples of possible cam faces for the cam **32:** Figure **4** shows a cam with a single lobe **32a** (hereinafter referred to as a single-lobe cam); and Figure **5** shows a cam with a pair of lobes **32a** and **32a** (hereinafter referred to as a two-lobe cam). To be specific, the two-lobe cam shown in Figure **5** has two lobes **32a** and **32a** phase-shifted by 180 degrees relative to each other.

The single plunger **30** of the supply pump **14** is set up to reciprocally move in a half period of the cycle of the engine pistons **3.** That is, the plunger **30** reciprocally moves twice during each rotation of the crankshaft **5.** When the single-lobe cam as shown in Figure **4** is employed as the cam **32** for the supply pump **14,** the setup can be implemented by rotating the single-lobe cam twice as fast as the crankshaft **5.** On the other hand, when the two-lobe cam as shown in Figure **5** is employed as the cam **32** for the supply pump **14,** the setup can be implemented by rotating the two-lobe cam as fast as the crankshaft **5.**

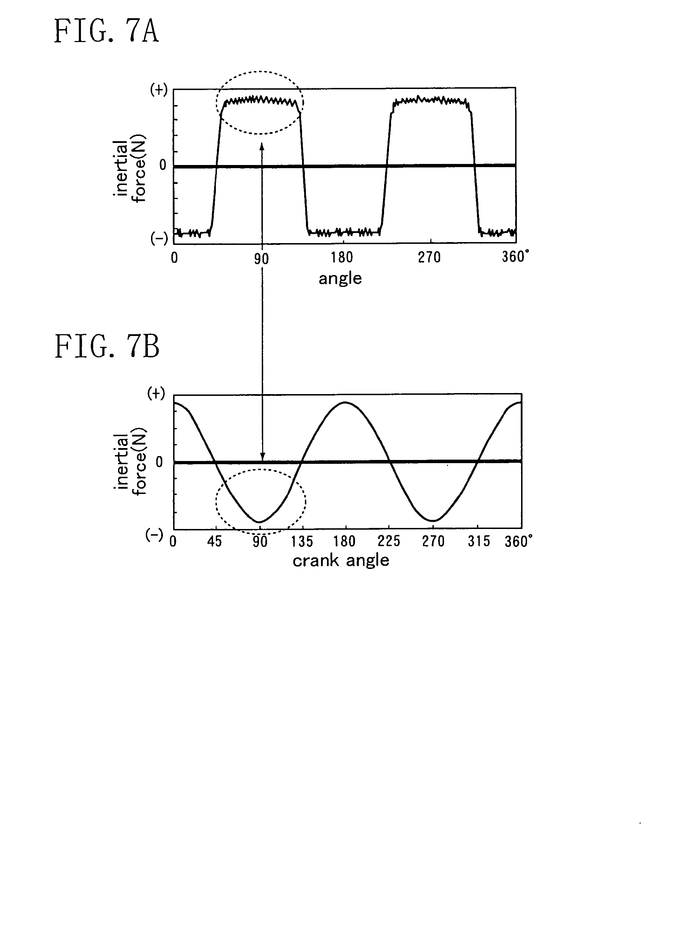

In the supply pump **14** with the single plunger **30,** vibromotive forces are generated by reciprocal movement of the plunger **30.** Figure **6** is a graph for illustrating the vibromotive forces generated by a single, reciprocally moving plunger **30.** In the graph, the dot-dashed line, the broken line and the solid line indicate the displacement, velocity and acceleration of the plunger **30,** respectively. The acceleration of the plunger **30** correlates with the vibromotive force. That is, the higher the acceleration, the larger the vibromotive force. In order to increase the acceleration of the plunger **30,** it is necessary to steepen the shape of the lobe **32a** of the cam face of the cam **32** like the single-lobe cam or the two-lobe cam shown in Figures **4** and **5.**

Figure **7A** is related to Figure **6** and shows the inertial forces generated by the supply pump **14** with the single plunger **30.** When the plunger **30** is reciprocally moved once every 180 degrees of rotation of the crankshaft 5 (that is, when the plunger **30** is reciprocally moved twice during each rotation of the crankshaft 5), upward (positive) and downward (negative) inertial forces alternately appear at intervals of 90 degrees of crankshaft rotation. This cycle of positive and negative inertial forces is the same as the cycle of the second-order inertial forces of the pistons and associated parts in the four-cylinder engine **1** shown in Figure **7B.**

Therefore, if the inertial forces of the supply pump **14** are controlled to have an opposite phase to that of the second-order inertial forces of the pistons and associated parts in the engine **1** to synchronise peaks (valleys) of the inertial forces of the supply pump **14** with valleys (peaks) of the second-order inertial forces of the engine **1** as shown in the arrow in Figures **7A** and **7B,** the second-order inertial forces of the engine pistons and associated parts can be reduced by the inertial forces of the supply pump **14.** This reduces the pitching vibrations and in turn suppresses booming noise.

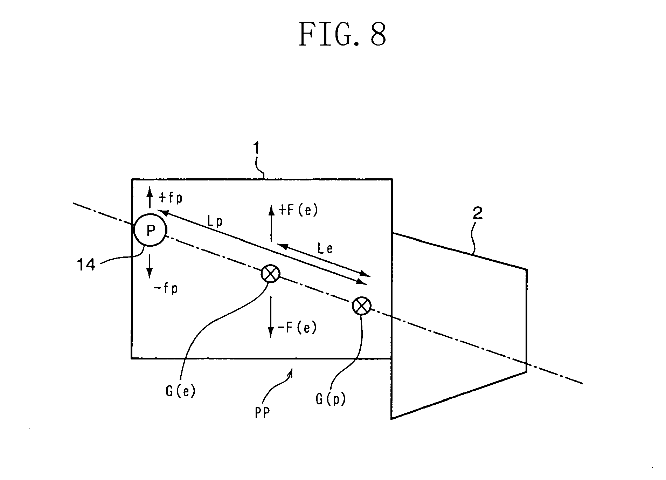

Figure **8** is related to Figure **1** and shows a diagram for illustrating the effects associated with the relative position between the supply pump **14** and each of the centres of gravity of the power plant **PP** and the four-cylinder engine **1** alone. When the supply pump **14** is placed at the front end of the engine **1,** the distance Lp between the supply pump **14** and the centre of gravity G(p) of the power plant **PP** is larger than the distance Le between the centre of gravity G(e) of the engine **1** and the centre of gravity G(p) of the power plant **PP.** Since the moment of inertia is proportional to the square of the distance, relatively large moment of inertia can be obtained even when the inertial force of the supply pump **14** is smaller, for example, two orders of magnitude smaller than the second-order inertial force of the engine **1.**

Therefore, if the supply pump **14** is placed on the front end face or at the front end part of the engine 1 to keep the distance Lp from the centre of gravity G(p) of the power plant **PP** as long as possible, this effectively reduce the pitching vibrations due to the pistons and their associated parts in the engine 1 and in turn suppresses booming noise.

In order to effectively reduce the pitching vibrations due to the pistons and their associated parts in the engine 1, it is ideal to place the supply pump 14 in the vertical plane including the straight line 36 (see Figure 2) connecting the centre of gravity G(e) of the four-cylinder engine 1 and the centre of gravity G(p) of the power plant PP. When, however, the transmission 2 has a heavy-weight extension (differential gear box) 12 extending toward the rear of the car body as in the power plant PP in this embodiment, the centre of gravity G(p) of the power plant PP is shifted toward the rear of the car body by the mass of the extension 12. As a result, as shown in Figure 2, the straight line 36 connecting the shifted centre of gravity G(p) and the centre of gravity G(e) of the engine 1 is inclined at a certain angle to the crankshaft line 37 so that it is shifted frontward at the front end of the engine 1 and rearward at the end thereof adjoining the transmission 2.

This means that the placement of the supply pump 14 on the car front side of the front end part of the engine 1 is a close-to-ideal placement. As can be seen from Figure 2, the supply pump 14 placed on the car front side of the front end part of the engine 1 is close to the line 36 inclined by the mass of the rearward extension 12 of the transmission 2, which is close to the ideal placement of the supply pump 14 for reducing the pitching vibrations of the power plant PP.

In addition, since the engine 1 in this embodiment employs the front-intake/rear-exhaust layout, the supply pump 14 placed on the car front side of the front end part of the engine 1 can be avoided from being affected by exhaust heat from the engine 1. Also in this respect, the placement of the supply pump 14 at that position stands to reason.

The above embodiment is effective at suppressing booming noise by reducing the pitching vibrations to the extent they can be absorbed by the mounting member such as a rubber mount using the supply pump 14 which is an accessory of the diesel engine 1. In order to implement this method for suppressing booming noise, the conventional supply pump structure with two plungers need only be modified to have a single plunger. The other components can be formed of the existing elements. This is not only true for diesel engines, but also for direct-injection type gasoline engines for injecting gasoline directly into cylinders.

The engine **1** may include a balancer **40** described in the Background Art, such as a well-known balance shaft, as shown in the imaginary line in Figure 1. Alternatively, engines with no balancer can also be employed in this invention. Balancers of such kind are effectively used for four-cylinder engines. Particularly, it is said that the balancers are effective for large-displacement four-cylinder engines with displacements greater than 2000cc in which reciprocal second-order inertial forces become pronounced.

For example, in designing a large-displacement engine (e.g., 2400cc engine) by increasing the cylinder bore diameter of a 2000cc four-cylinder engine with no balancer, even when the balancer **40** would have conventionally been assembled into the power plant, the supply pump structure of this invention can use the vertical vibromotive forces of the supply pump 14 to reduce the pitching vibrations and thereby suppress booming noise. Therefore, the engine displacement can be increased without a major design change.

### Industrial Applicability

As described above, the engine vibration reduction system of this invention can use reciprocal movement of the plunger of the fuel supply pump to effectively reduce pitching vibrations due to reciprocal second-order inertial forces of the pistons and associated parts of the engine. Therefore, the engine vibration reduction system of this invention is very useful for in-line four-cylinder engines generating reciprocal second-order inertial forces, especially for relatively large displacement engines with no balancer.

## Claims

1. An engine vibration reduction system for a reciprocating engine **(1)** mounted on a vehicle **(10)** through an elastic mount, the engine **(1)** being equipped with a high-pressure fuel supply pump **(14)** driven by a crankshaft **(5)** and a common rail for distributing high-pressure fuel fed from the pump **(14)** into a plurality of cylinders while accumulating the fed high-pressure fuel, the engine vibration reduction system **characterised in that**
the pump **(14)** includes a single plunger **(30)** and a cam **(32)** for reciprocally moving the plunger **(30)** to generate inertial forces opposite in phase to second-order inertial forces of pistons and associated parts in the engine **(1)** and is placed at the front part of the engine **(1).**

2. The engine vibration reduction system of claim 1, **characterised in that**
the engine **(1)** is an in-line four-cylinder engine, and
the cam **(32)** of the pump **(14)** is operatively connected to the crankshaft **(5)** of the in-line four-cylinder engine **(1)** so that the plunger **(30)** reciprocally moves twice during each rotation of the crankshaft **(5).**

3. The engine vibration reduction system of claim 2, **characterised in that**
the cam face of the cam **(32)** of the pump **(14)** has two lobes **(32a, 32a)** phase-shifted by 180 degrees relative to each other, and
the cam **(32)** is configured to rotate as fast as the crankshaft **(5).**

4. The engine vibration reduction system of claim 2, **characterised in that**
the cam face of the cam **(32)** of the pump **(14)** has a single lobe **(32a),** and
the cam **(32)** is configured to rotate twice as fast as the crankshaft **(5).**

5. The engine vibration reduction system of any one of claims 1 to 4, **characterised in that**
the engine **(1)** is transversely mounted on the vehicle **(10)** with the crankshaft **(5)** oriented along the width of the vehicle,
the engine **(1)** constitutes a power plant **(PP)** together with a transmission **(2)** connected to the rear end of the engine **(1)** and a differential gear box **(12)** for front wheels which is integrally provided next to the side of the transmission **(2)** toward the rear of the vehicle, and
the pump **(14)** is placed on the side surface of the front part of the engine **(1)** toward the front of the vehicle.
